# FASCICULE DE BREVET EUROPEEN

(11) **EP 2 357 368 B1**
(45) Date de publication et mention de la délivrance du brevet: **08.04.2015**
(21) Numéro de dépôt: 11305057.9
(22) Date de dépôt: 20.01.2011
(51) Int. Cl.: F16B 13/00

(54) **Pièce de fixation et système de fixation utilisant cette pièce**
Befestigungsteil und dieses Teil verwendendes Befestigungssystem
Attachment part and attachment system using said part.

(30) Priorité: 27.01.2010 FR 1050539
(43) Date de publication de la demande: 17.08.2011
(73) Titulaire: Ateliers LR Etanco, 78230 Le Pecq (FR)
(72) Inventeur: Moine, Bruno, 75017, PARIS (FR); Leroy, Alain, 78820, JUZIERS (FR); Lemontey, Michel, 78580, MAULE (FR)
(74) Mandataire: Mazabraud, Xavier

(56) Documents cités:
- DE-A1- 3 433 933
- DE-A1-102006 061 492
- DE-U1- 29 718 100
- DE-U1-202009 007 097
- FR-A1- 2 920 844

## Description

L'invention concerne une pièce de fixation de panneaux sur une structure support, notamment de panneaux pour réaliser l'isolation et l'étanchéité d'un toit, et un système utilisant une telle pièce et une vis.

Les toits des bâtiments sont généralement réalisés à l'aide de bandes métalliques nervurées, appelées « bac acier », ou d'autres supports, fixés à la structure du bâtiment, sur lesquelles sont posées une couche d'isolant et une membrane d'étanchéité. La couche d'isolant peut être constituée de tout mauvais conducteur, tel que laine de verre, laine de roche, polystyrène ou autre. Son épaisseur varie selon les applications, elle est généralement comprise entre 40 et 300 mm voire plus. La membrane d'étanchéité peut être constituée d'une couche bitumineuse, d'un film de PVC renforcé ou autre. A cause du vent, il est nécessaire de fixer mécaniquement la couche d'isolant et la membrane d'étanchéité au support. La pose de cette membrane ne doit présenter aucun défaut aussi léger soit-il, car la moindre fuite peut avoir à la longue des effets catastrophiques allant jusqu'au remplacement complet de la membrane et de la couche d'isolation du toit, qui est une opération très onéreuse.

Pour réaliser cet ancrage, les systèmes de fixation de l'état de l'art sont en deux parties, d'une part une pièce de fixation, comportant une tête de retenue sensiblement plate et un fût tubulaire orthogonal à la tête, et d'autre part une vis métallique qui prend place dans le fût. Ceci présente l'avantage de limiter la longueur de la vis, mais également de réaliser une rupture de pont thermique car la pièce de fixation est en matériau non métallique, par exemple en matière plastique moulée.

La tête de ladite pièce de fixation comporte un orifice axial qui communique avec le fût tubulaire, par lequel on peut introduire ladite vis, et l'extrémité en forme de pointe du fût présente un orifice axial par lequel la vis peut sortir partiellement. Au voisinage de l'extrémité en forme de pointe dudit fût, un rétrécissement d'alésage de diamètre inférieur à celui de la tête de la vis forme chanfrein, la tête de la vis prenant appui à l'intérieur du fût sur cette partie chanfreinée. D'autre part, la surface intérieure du fût comporte des protubérances ou godrons que la tête de la vis peut franchir lorsqu'elle est forcée à l'intérieur du fût mais qu'elle ne peut franchir en sens inverse. Ainsi, la tête de la vis est prisonnière à l'intérieur du fût.

La vis peut présenter une extrémité foreuse ou pointue pour percer le support, suivie d'une partie taraudeuse pour créer un filetage. L'ensemble constitue un élément d'appui et/ou de fixation pour la couche d'isolant et la membrane d'étanchéité.

La Demanderesse a déposé la demande FR 2 920 844 concernant une pièce de fixation destinée à être utilisée avec une vis, comportant notamment une tête de retenue solidaire d'un fût tubulaire, le fût comportant sur sa paroi extérieure une nervure saillante principale qui s'étend depuis la tête de retenue jusqu'à l'extrémité de la pointe du fût, l'extrémité en forme de pointe étant taillée en forme de biseau et présentant donc une surface biseautée bordée par deux arrêtes convergeant vers la pointe du fût.

Il s'avère que cette pièce de fixation présente un certain nombre d'inconvénients :
- par temps chaud, la pointe du fût a tendance à se plier sous l'effort de pénétration qui est appliqué sur la tête de retenue ; la nervure saillante principale, qui est la seule à s'étendre depuis la tête de retenue jusqu'à l'extrémité de la pointe du fût, n'est donc pas suffisante pour rigidifier cette pointe;
- du fait que la tête de la vis appuie sur la partie formant chanfrein à l'intérieur du fût, le diamètre intérieur du fût correspond à celui de la vis utilisée, ce qui conduit à multiplier les pièces d'appui en fonction des diamètres des vis utilisées. Ceci est d'autant plus gênant qu'il doit en tout état de cause exister une gamme de pièces de fixation de longueurs différentes pour tenir compte des différentes épaisseurs des couches d'isolant utilisées.

L'invention vise à résoudre ces problèmes. A cet effet, l'invention propose une pièce de fixation destinée à être utilisée avec une vis, comportant un fût tubulaire de forme sensiblement cylindrique, une première extrémité comportant un premier orifice et une tête de retenue qui s'étend sensiblement radialement à partir de ce premier orifice, une seconde extrémité en forme de pointe et comportant un second orifice par lequel la vis peut sortir partiellement, l'extrémité en forme de pointe étant taillée en forme de biseau et présentant une surface biseautée bordée par deux arrêtes convergeant vers la pointe du fût. En outre :
- le fût comporte sur sa paroi extérieure au moins deux nervures saillantes principales, qui s'étendent depuis ladite tête de retenue jusqu'à la surface biseautée, disposées de façon symétrique par rapport à un plan axial orthogonal à la surface biseautée (16),
- le fût présente une première partie de section circulaire adjacente à la tête de retenue, une seconde partie de section généralement circulaire au voisinage de son extrémité pointue, le diamètre intérieur de la seconde partie étant inférieur au diamètre intérieur de la première partie, la paroi intérieure du fût comportant un épaulement reliant radialement les deux parties du fût.

Grâce à ces dispositions, la pointe du fût est renforcée et résiste mieux à la force qui lui est appliquée pour perforer la membrane d'étanchéité.

Les deux parties du fût de diamètres intérieurs différents avec un épaulement reliant ces deux parties permettent d'utiliser des vis à collerette, la collerette prenant appui sur cet épaulement pour exercer une force de serrage sur la pièce de fixation. La pièce de fixation est ainsi utilisable avec une famille de vis, pourvu que ces vis comportent une collerette ayant toutes le même diamètre.

Avantageusement, la seconde partie du fût peut comporter des bossages qui réduisent localement le diamètre intérieur du fût.

Les bossages peuvent être radiaux et s'étendre axialement, procurant à la seconde partie du fût une section multi lobée, de préférence trilobée.

De cette façon, cette seconde partie du fût peut retenir par frottement une vis à l'intérieur de la pièce de fixation, ce qui facilite la manutention et la fixation.

Avantageusement, la pièce de fixation peut comporter en outre au moins un picot sous la tête de retenue, de longueurs différentes lorsqu'il existe au moins deux picots.

Les picots ont pour fonction, en pénétrant dans la membrane d'étanchéité, d'empêcher la pièce de fixation de tourner lorsque la vis est appliquée et vissée. Ils sont de longueur différente pour qu'ils ne se présentent pas simultanément sur la membrane et donc pour répartir l'effort de pénétration de ces picots.

L'invention porte également sur un système de fixation comprenant une pièce de fixation selon l'invention et une vis, la vis comportant une tige et, à une première extrémité, une pointe et un filetage, et à une seconde extrémité, une partie sous tête de plus grand diamètre prolongée par une tête de préhension, une collerette s'étendant radialement entre la partie de plus grand diamètre et la tête de préhension, le diamètre de la collerette étant supérieur à celui de la partie de plus grand diamètre et à celui de la tête de préhension, la pièce de fixation et la vis coopérant de façon que :
- le diamètre intérieur de la première partie du fût est sensiblement égal à celui de la collerette de la vis,
- le diamètre intérieur de la seconde partie du fût est sensiblement égal à celui de la partie de plus grand diamètre de la vis.

La vis est introduite dans le fût de la pièce de fixation par son premier orifice au travers de la tête de retenue, puis la collerette vient prendre appui sur l'épaulement prévu entre la première et la seconde partie du fût.

La tête de préhension de la vis est par exemple un écrou six pans, et la douille d'un outil de vissage adapté peut être introduite dans la première partie du fût pour le vissage. Cette douille prend appui sur la collerette et contribue à orienter correctement la vis.

Dans un autre mode de réalisation du système de fixation, la partie sous tête et la tige de la vis ont le même diamètre.

Avantageusement, la seconde partie du fût de la pièce de fixation peut comporter des bossages, la pièce de fixation et la vis pouvant coopérer en outre de façon que les bossages retiennent la vis à l'intérieur du fût par frottement sur sa partie de plus grand diamètre.

La partie sous tête de la vis prend place dans la seconde partie de la pièce de fixation, celle-ci pouvant comporter des bossages qui réduisent localement son diamètre. Par exemple, si le diamètre intérieur nominal de cette seconde partie est de 7 mm, le diamètre du cercle inscrit dans ces bossages peut être par exemple de 6,9 mm. Compte tenu de la plasticité de la pièce de fixation, ceci n'entrave pas l'entrée de la vis dans la pièce de fixation mais la maintient en place par frottement.

De cette façon, la vis, une fois introduite dans la pièce de fixation, est bloquée à l'intérieur du fût, ce qui facilite la manipulation de l'ensemble pièce de fixation ― vis. Par exemple, de tels ensembles peuvent être préparés à l'avance et stockés en attendant une opération de pose. Les bossages ne doivent pas avoir une extension radiale trop importante pour ne pas gêner l'introduction de la vis et sa mise en rotation pour la fixation.

Des modes de réalisation et des variantes seront décrits ci-après, à titre d'exemples non limitatifs, avec référence aux dessins annexés dans lesquels :
La figure 1 représente une pièce de fixation en perspective,
La figure 2A représente une pièce de fixation en élévation,
La figure 2B représente la pièce de fixation en coupe verticale selon B-B,
La figure 3 la même pièce de fixation comportant une vis en coupe verticale selon B-B,
La figure 4 représente une gamme de vis compatibles avec la pièce de fixation,
La figure 5 représente une coupe radiale selon A-A de la pièce de fixation.

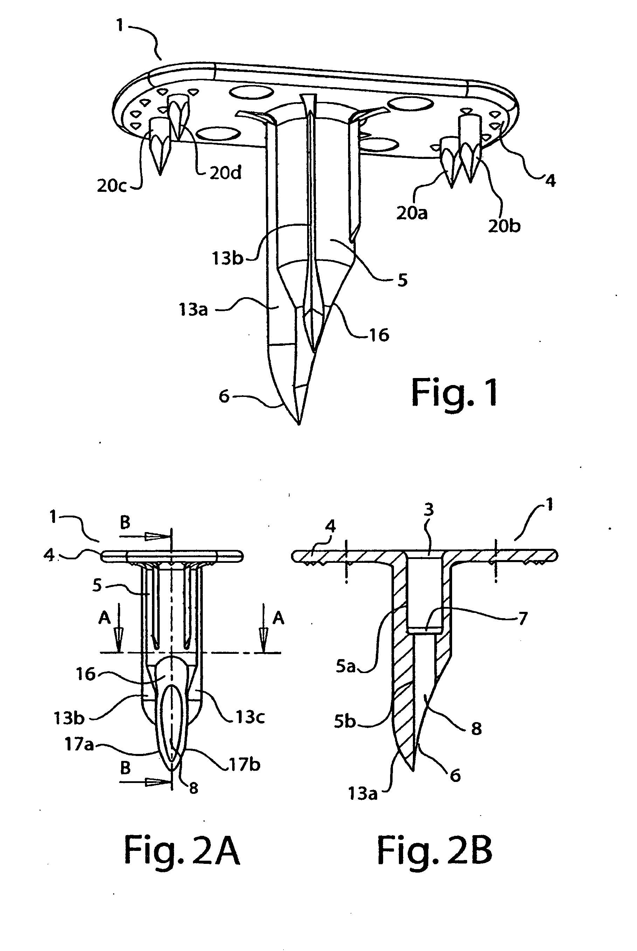

La pièce de fixation 1 illustrée par les figures 1, 2A et 2B comporte un fût tubulaire 5 solidaire d'une tête de retenue 4 sensiblement plane. Dans l'exemple illustré, la tête de retenue a une forme sensiblement rectangulaire, mais d'autres formes sont possibles, par exemple une forme circulaire ou autre. Le fût 5 comporte deux orifices, un orifice 3 qui débouche au travers de la tête de retenue 4, et un orifice 8 à son autre extrémité 6 qui est sous forme de pointe. Cette extrémité présente une portion en forme de biseau formé par une surface 16 qui intersecte le fût et délimite deux arrêtes 17a et 17b formant tranchant. L'extrémité en forme de biseau et les arrêtes tranchantes contribuent à faciliter le perçage de la membrane d'étanchéité lorsque la pièce de fixation y est appliquée. Dans les exemples illustrés, la surface 16 est concave, mais dans d'autres modes de réalisation elle peut être plane ou hélicoïdale.

Des nervures saillantes 13a, 13b et 13c s'étendent sur la surface externe du fût, parallèlement à l'axe du fût. Les nervures principales 13b et 13c sont disposées de façon symétrique par rapport à un plan axial orthogonal à la surface biseautée 16 et s'étendent depuis la tête de retenue respectivement jusqu'aux arrêtes 17a et 17b. La nervure 13a s'étend depuis la tête de retenue jusqu'à la pointe du fût.

Les nervures principales 13b et 13c sont décalées de part et d'autre de la nervure 13a autour de l'axe du fût d'un angle égal à environ 60°. Si la nervure 13a est absente, les nervures 13b et 13c forment un angle d'environ 120° entre elles. Les nervures illustrées sont rectilignes et disposées le long de génératrices du fût, mais elles pourraient être courbes, par exemple hélicoïdales avec un pas suffisamment grand pour que la pièce de fixation puisse pénétrer facilement dans la couche d'isolant.

Le fût 5 présente deux parties 5a et 5b, une première partie 5a adjacente à la tête de retenue 4 et une seconde partie 5b qui comporte l'extrémité 6. Le diamètre intérieur de la première partie 5a est supérieur à celui de la seconde partie 5b ; les deux parties sont séparées par un épaulement radial 7 qui effectue la liaison entre les deux diamètres intérieurs.

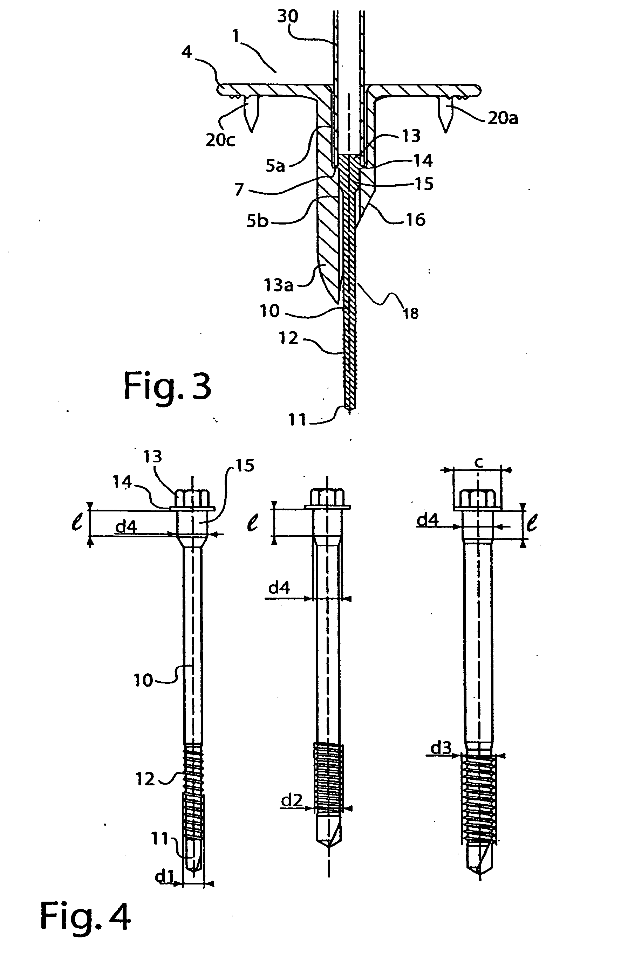

La figure 3 illustre une pièce de fixation 1 renfermant une vis 10 adaptée à la pièce de fixation 1. La vis 10 comporte une tige 18, comportant à une extrémité une pointe auto foreuse 11 et un filetage 12, et à son autre extrémité une tête 13, une collerette 14 et une partie cylindrique 15, ou partie sous tête, toutes trois d'un diamètre supérieur à celui de la tige 18.

Une coopération de la pièce de fixation 1 et de la vis 10 est obtenue si :
- le diamètre intérieur de la partie 5a du fût 5 est sensiblement égal à celui de la collerette 14, et
- le diamètre intérieur de la partie 5b du fût est sensiblement égal à celui de partie sous tête 15.

La vis 10 peut donc pénétrer dans la pièce de fixation 1 jusqu'à ce que la collerette 14 repose sur l'épaulement 7.

On remarque qu'il suffit pour obtenir cette coopération que les dimensions du fût 5 soient adaptées au diamètre de la collerette 14 et au diamètre et à la longueur de la partie sous tête 15 ; le diamètre de la tige 10 et la longueur de la vis sont indifférents. Une même pièce de fixation peut donc être utilisée si ces dimensions sont identiques pour une gamme de vis. La figure 4 illustre une telle gamme de vis. Les trois vis illustrées en figure 4 ont des diamètres de tige d1, d2, d3 différents et des longueurs différentes, mais des diamètres c de collerette, des longueurs 1 et des diamètres d4 de partie sous tête identiques. Cette gamme de vis peut donc être utilisée avec la même pièce de fixation.

Une pièce de fixation 1 a par exemple un diamètre intérieur de première partie du fût égal à 10 mm et un diamètre intérieur de seconde partie égal à 7 mm. Cette pièce de fixation est utilisable avec une gamme de vis ayant des diamètres de tige différents, par exemple 4,8, 5,5 ou 6,3 mm, pourvu qu'elles aient un même diamètre de collerette, sensiblement 10 mm, et un même diamètre de partie sous tête, sensiblement 7 mm. La tige de la vis est raccordée à la partie sous tête par tout profil adéquat, par exemple un chanfrein.

Une vis (non représentée) dont les diamètres de la partie sous tête et de la tige sont égaux, par exemple à 6,5 mm, peut faire partie d'une telle gamme.

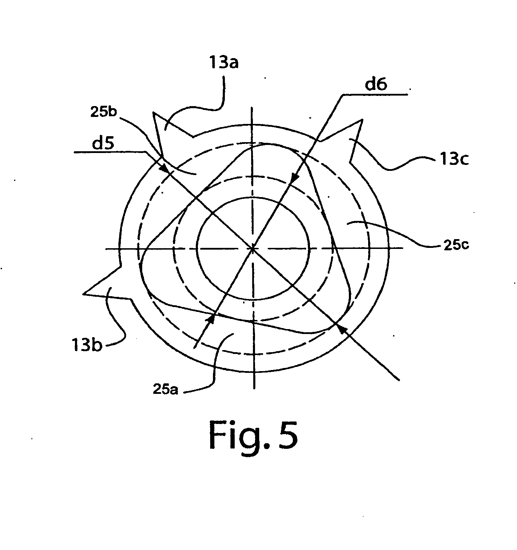

Comme illustré par la figure 5, la seconde partie du fût 5b comporte, sur la surface intérieure de sa paroi, trois bossages ou renflements 25a, 25b et 25c, qui réduisent légèrement localement le diamètre intérieur de cette seconde partie 5b, de façon à maintenir la vis en place une fois qu'elle a été insérée dans la pièce de fixation. Dans l'exemple numérique mentionné plus haut, le diamètre d5 du cercle exinscrit pourra être égal ou légèrement supérieur à 7 mm, par exemple 7,1 mm, et le diamètre d6 du cercle inscrit dans les bossages pourra être légèrement inférieur à 7 mm, par exemple 6,9 mm. Cette réduction locale du diamètre intérieur suffit à maintenir la vis en place par frottement sur sa partie sous tête 15.

Dans l'exemple illustré, les bossages 25a, 25b et 25c s'étendent parallèlement à l'axe du fût, mais toute autre disposition est possible, par exemple des bossages hélicoïdaux ou sensiblement ponctuels, pourvu qu'ils conduisent à une légère réduction locale du diamètre intérieur de la seconde partie 5b du fût, de façon à retenir la vis sans la bloquer et notamment sans rendre plus difficile le vissage. De même, le nombre de bossages peut être différent de trois, par exemple égal à deux ou à quatre.

Comme illustré en figure 3, la douille 30 (en traits interrompus) d'un outil de vissage prend place dans le première partie 5a du fût, vient en prise sur la tête 13 et peut appuyer sur la collerette 14 de la vis. Cette coopération de la douille 30 et de la collerette 14 permet de fournir à la vis en cours de vissage un appui et une orientation.

La pièce de fixation 1 comporte sous la tête de retenue 4 des picots 20a, 20b, 20c et 20d, comportant une pointe à leur extrémité, et qui ne sont pas tous de la même longueur lorsqu'il existe au moins deux picots, de façon que tous les picots ne se présentent pas en même temps face à la membrane d'étanchéité, ce qui serait susceptible de provoquer un pic dans l'effort de pénétration. Les picots n'étant pas tous de la même longueur, on rend progressif ou sensiblement constant l'effort de pénétration dans la membrane d'étanchéité. Dans l'exemple illustré figure 1, ces picots sont cylindriques de section circulaire, mais ils pourraient avoir une section différente, par exemple polygonale. Ils peuvent comporter également des nervures longitudinales sur leur surface, comme le fût principal. Leur nombre peut être quelconque et n'est pas limité à quatre.

## Revendications

1. Pièce de fixation (1) destinée à être utilisée avec une vis, comportant un fût tubulaire (5) de forme sensiblement cylindrique, une première extrémité comportant un premier orifice (3) et une tête de retenue (4) qui s'étend sensiblement radialement à partir de ce premier orifice, une seconde extrémité en forme de pointe (6) et comportant un second orifice (8) par lequel la vis peut sortir partiellement, l'extrémité en forme de pointe (6) étant taillée en forme de biseau et présentant une surface biseautée (16) bordée par deux arrêtes (17a, 17b) convergeant vers la pointe du fût,
**caractérisée en ce que** :
- le fût comporte sur sa paroi extérieure au moins deux nervures saillantes principales (13b, 13c), qui s'étendent depuis ladite tête de retenue (4) jusqu'à la surface biseautée (16), disposées de façon symétrique par rapport à un plan axial orthogonal à la surface biseautée (16),
- le fût (5) présente une première partie (5a) de section circulaire adjacente à la tête de retenue (4), une seconde partie (5b) de section généralement circulaire au voisinage de son extrémité pointue (6), le diamètre intérieur de la seconde partie (5b) étant inférieur au diamètre intérieur de la première partie (5a), la paroi intérieure du fût comportant un épaulement (7) reliant radialement les deux parties du fût.

2. Pièce de fixation selon la revendication 1,
**caractérisée en ce qu'**elle comporte en outre, sur sa paroi extérieure, une nervure saillante (13a) qui s'étend depuis la tête de retenue (4) jusqu'à la pointe du fût (6).

3. Pièce de fixation selon l'une des revendications 1 ou 2,
**caractérisée en ce que** lesdites nervures saillantes (13a, 13b, 13c) sont rectilignes.

4. Pièce de fixation selon l'une des revendications précédentes, **caractérisée en ce qu'**elle comporte en outre au moins un picot (20a, 20b, 20c, 20d) sous la tête de retenue (4), qui ne sont pas tous de la même longueur lorsqu'il existe au moins deux picots.

5. Pièce de fixation selon l'une des revendications 1 à 4,
**caractérisée en ce que** la seconde partie (5b) du fût comporte des bossages (25a, 25b, 25c) qui réduisent localement le diamètre intérieur du fût.

6. Pièce de fixation selon la revendication 5,
**caractérisée en ce que** lesdits bossages (25a, 25b, 25c) sont radiaux et s'étendent axialement, procurant à la seconde partie du fût une section multi lobée, de préférence trilobée.

7. Système de fixation comprenant une pièce de fixation (1) selon l'une des revendications 1 à 4 et une vis (10), la vis comportant une tige (18) et, à une première extrémité, une pointe (11) et un filetage (12), et à une seconde extrémité, une partie sous tête de plus grand diamètre (15) prolongée par une tête de préhension (13), une collerette (14) s'étendant radialement entre la partie sous tête (15) et la tête de préhension (13), le diamètre de la collerette (14) étant supérieur à celui de la partie sous tête (15) et à celui de la tête de préhension (13), la pièce de fixation (1) et la vis (10) coopérant de façon que :
- le diamètre intérieur de la première partie (5a) du fût est sensiblement égal au diamètre de la collerette (14) de la vis,
- le diamètre intérieur de la seconde partie (5b) du fût est sensiblement égal au diamètre de la partie sous tête (15) de la vis.

8. Système de fixation comprenant une pièce de fixation (1) selon l'une des revendications 1 à 4 et une vis (10), la vis comportant une tige (18) et, à une première extrémité, une pointe (11) et un filetage (12), et à une seconde extrémité, une partie sous tête (15) de même diamètre que ladite tige, prolongée par une tête de préhension (13), une collerette (14) s'étendant radialement sous la tête de préhension (13), le diamètre de la collerette (14) étant supérieur à celui de la partie sous tête (15) et à celui de la tête de préhension (13), la pièce de fixation (1) et la vis (10) coopérant de façon que :
- le diamètre intérieur de la première partie (5a) du fût est sensiblement égal au diamètre de la collerette (14) de la vis,
- le diamètre intérieur de la seconde partie (5b) du fût est sensiblement égal au diamètre de la partie sous tête (15) et de la tige (18) de la vis.

9. Système de fixation selon la revendication 7 ou 8, dans lequel la pièce de fixation (1) comporte des bossages (25a, 25b, 25c) selon l'une des revendications 5 ou 6, la pièce de fixation (1) et la vis (10) coopérant en outre de façon que :
- les bossages (25a, 25b, 25c) retiennent la vis (10) à l'intérieur du fût (5) par frottement sur sa partie sous tête (15).

## Patentansprüche

1. Befestigungsteil (1), das zur Verwendung mit einer Schraube ausgelegt ist, umfassend einen rohrförmigen Schaft (5) von im Wesentlichen zylindrischer Form, ein erstes Ende umfassend eine erste Öffnung (3) und einen Rückhaltekopf (4), der sich im Wesentlichen radial ausgehend von dieser ersten Öffnung erstreckt, ein zweites Ende in spitzer Form (6) und umfassend eine zweite Öffnung (8), durch die die Schraube teilweise austreten kann, wobei das Ende in spitzer Form (6) abgeschrägt geschnitten ist und eine abgeschrägte Fläche (16) aufweist, die von zwei Stopps (17a, 17b) eingerahmt ist, die in Richtung der Spitze des Schafts aufeinander zulaufen,
**dadurch gekennzeichnet, dass**:
- der Schaft auf seiner Außenwand mindestens zwei aufragende Rippen (13b, 13c) umfasst, die sich von Rückhaltekopf (4) bis zur kantigen Oberfläche (16) erstrecken, die symmetrisch bezüglich einer Axialfläche senkrecht zur abgeschrägten Fläche (16) angeordnet sind,
- der Schaft (5) einen ersten Teil (5a) von kreisförmigem Querschnitt unmittelbar anschließend an den Rückhaltekopf (4), einen zweiten Teil (5b) von im allgemeinen kreisförmigem Querschnitt in der Nähe seines Spitzen Endes (6) aufweist, wobei der innere Durchmesser des zweiten Teils (5b) kleiner ist als der innere Durchmesser des ersten Teils (5a), wobei die Innenwand des Schafts eine Schulter (7) umfasst, die die beiden Teile des Schafts radial verbindet.

2. Befestigungsteil nach Anspruch 1,
**dadurch gekennzeichnet, dass** es weiterhin, auf seiner Außenwand, eine aufragende Rippe (13a) umfasst, die sich von Rückhaltekopf (4) bis zur Schaftspitze (6) erstreckt.

3. Befestigungsteil nach einem der Ansprüche 1 oder 2,
**dadurch gekennzeichnet, dass** die aufragenden Rippen (13a, 13b, 13c) geradlinig sind.

4. Befestigungsteil nach einem der vorhergehenden Ansprüche,
**dadurch gekennzeichnet, dass** es weiterhin mindestens einen Zacken (20a, 20b, 20c, 20d) unter dem Rückhaltekopf (4) umfasst, die nicht alle von gleicher Länge sind, wenn mindestens zwei Zacken vorhanden sind.

5. Befestigungsteil nach einem der vorhergehenden Ansprüche 1 bis 4,
**dadurch gekennzeichnet, dass** der zweite Teil (5b) des Schafts Bossen (25a, 25b, 25c) umfasst, die den Innendurchmesser des Schafts lokal verringern.

6. Befestigungsteil nach Anspruch 5,
**dadurch gekennzeichnet, dass** die Bossen (25a, 25b, 25c) radial sind und sich axial erstrecken, wobei sie für den zweiten Teil des Schafts einen mehrfach gelappten, vorzugsweise dreifach gelappten, Abschnitt bereitstellen.

7. Befestigungssystem umfassend ein Befestigungsteil (1) nach einem der Ansprüche 1 bis 4, und eine Schraube (10), wobei die Schraube einen Schaft (18) und an einem ersten Ende eine Spitze (11) und ein Gewinde (12) umfasst, und an einem zweiten Ende einen Unterkopfteil von größerem Durchmesser (15), der um einen Greifkopf (13) verlängert ist, eine Manschette (14), die sich radial zwischen dem Unterkopfteil (15) und dem Greifkopf (13) erstreckt, umfasst, wobei der Durchmesser der Manschette (14) größer ist als derjenige des Unterkopfteils (13), wobei das Befestigungsteil (1) und die Schraube (10) derart zusammenwirken, dass:
- der Innendurchmesser des ersten Teils (5a) des Schafts im Wesentlichen gleich dem Durchmesser der Manschette (14) der Schraube ist,
- der Innendurchmesser des zweiten Teils (5b) des Schafts im Wesentlichen gleich dem Durchmesser des Unterkopfteils (15) der Schraube ist.

8. Befestigungssystem umfassend ein Befestigungsteil (1) nach einem der Ansprüche 1 bis 4, und eine Schraube (10), wobei die Schraube einen Schaft (18) umfasst, und an einem ersten Ende eine Spitze (11) und ein Gewinde (12) umfasst, und an einem zweiten Ende einen Unterkopfteil von gleichem Durchmesser (15) wie der Schaft, der um einen Greifkopf (13) verlängert ist, eine Manschette (14), die sich radial unter dem Greifkopf (13) erstreckt, umfasst, wobei der Durchmesser der Manschette (14) größer ist als derjenige des Unterkopfteile (15) und als derjenige des Greifkopfs (13), wobei das Befestigungsteil (1) und die Schraube (10) derart zusammenwirken, dass:
- der Innendurchmesser des ersten Teils (5a) des Schafts im Wesentlichen gleich dem Durchmesser der Manschette (14) der Schraube ist,
- der Innendurchmesser des zweiten Teils (5b) des Schafts im Wesentlichen gleich dem Durchmesser des Unterkopfteils (15) und des Schafts (18) der Schraube ist.

9. Befestigungssystem umfassend ein Befestigungsteil (1) nach einem der Ansprüche 7 oder 8, wobei das Befestigungsteil (1) Bossen (25a, 25b, 25c) nach einem der Ansprüche 5 oder 6 umfasst,
wobei das Befestigungsteil (1) und die Schraube (10) weiterhin derart zusammenwirken, dass:
- die Bossen (25a, 25b, 25c) die Schraube (10) im Inneren des Schafts (5) durch Reibung an ihrem Unterkopfteil (15) zurückhalten.

## Claims

1. Attachment part (1) intended to be used with a screw, comprising a substantially cylindrical shaped tubular sleeve (5), a first end comprising first orifice (3) and retention head (4) that extends substantially radially from this first orifice, a second pointed end (6) and comprising a second orifice (8) through which the screw can partially exit, with the pointed end (6) being cut in the form of a bevel and having a bevelled surface (16) bordered by two edges (17a, 17b) converging towards the point of the sleeve,
**characterised in that**:
- the sleeve comprises on its outer wall at least two main projecting ribs (13b, 13c), which extend from said retention head (4) to the bevelled surface (16), arranged symmetrically with respect to an axial plane orthogonal to the bevelled surface (16),
- the sleeve (5) has a first portion (5a) of circular section adjacent to the retention head (4), a second portion (5b) of generally circular section in the vicinity of its pointed end (6), with the inner diameter of the second portion (5b) being less than the inner diameter of the first portion (5a), with the inner wall of the sleeve comprising a shoulder (7) radially connecting the two portions of the sleeve.

2. Attachment part according to claim 1,
**characterised in that** it further comprises, on its outer wall, a projecting rib (13a) which extends from the retention head (4) to the point of the sleeve (6).

3. Attachment part according to one of claims 1 or 2,
**characterised in that** said projecting ribs (13 a, 13b, 13c) are rectilinear.

4. Attachment part according to one of the preceding claims, **characterised in that** it further comprises at least one pin (20a, 20b, 20c, 20d) under the retention head (4), which are not all of the same length when there are at least two pins.

5. Attachment part according to one of claims 1 to 4,
**characterised in that** the second portion (5b) of the sleeve comprises bosses (25a, 25b, 25c) which locally reduce the inner diameter of the sleeve,

6. Attachment part according to claim 5,
**characterised in that** said bosses (25a, 25b, 25c) are radial and extend axially, procuring at the second portion of the sleeve a multi-lobed, and more preferably three-lobed, section.

7. Attachment system comprising an attachment part (1) according to one of claims 1 to 4 and a screw (10), with the screw comprising a rod (18) and, at a first end, a point (11) and a threading (12), and at a second end, a portion under the head of a greater diameter (15) extended by a gripping head (13), a flange (14) extending radially between the portion under the head (15) and the gripping head (13), with the diameter of the flange (14) being greater than that of the portion under the head (15) and than that of the gripping head (13), with the attachment part (1) and the screw (10) engaging in such a way that:
- the inner diameter of the first portion (5a) of the sleeve is substantially equal to the diameter of the flange (14) of the screw,
- the inner diameter of the second portion (5b) of the sleeve is substantially equal to the diameter of the portion under the head (15) of the screw.

8. Attachment system comprising an attachment part (1) according to one of claims 1 to 4 and a screw (10), with the screw comprising a rod (18) and, at a first end, a point (11) and a threading (12), and at a second end, a portion under the head (15) of the same diameter as said rod, extended by a gripping head (13), a flange (14) extending radially under the gripping head (13), with the diameter of the flange (14) being greater than that of the portion under the head (15) and than that of the gripping head (13), with the attachment part (1) and the screw (10) engaging in such a way that:
- the inner diameter of the first portion (5a) of the sleeve is substantially equal to the diameter of the flange (14) of the screw,
- the inner diameter of the second portion (5b) of the sleeve is substantially equal to the diameter of the portion under the head (15) and of the rod (18) of the screw.

9. Attachment system according to claim 7 or 8, wherein the attachment part (1) comprises bosses (25a, 25b, 25c) according to one of claims 5 or 6, with the attachment part (1) and with the screw (10) further engaging in such a way that:
- the bosses (25a, 25b, 25c) retain the screw (10) inside the sleeve (5) via friction on its portion under the head (15).
